Europäisches Patentamt

(19) European Patent Office

Office européen des brevets

(11) Publication number: 0 317 553 B1

(12) EUROPEAN PATENT SPECIFICATION

(45) Date of publication of patent specification:
09.10.91 Bulletin 91/41

(51) Int. Cl.$^5$: C02F 9/00, C02F 1/74

(21) Application number: 87903396.7

(22) Date of filing: 27.05.87

(86) International application number:
PCT/IT87/00050

(87) International publication number:
WO 87/07252 03.12.87 Gazette 87/27

(54) PROCESS FOR TREATING POLLUTANT EFFLUENT, PARTICULARLY IN THE TANNING INDUSTRY, AND PLANT FOR IMPLEMENTING THE PROCESS.

(30) Priority: 27.05.86 IT 8412286

(43) Date of publication of application:
31.05.89 Bulletin 89/22

(45) Publication of the grant of the patent:
09.10.91 Bulletin 91/41

(84) Designated Contracting States:
AT BE CH DE FR GB IT LI LU NL SE

(56) References cited:
EP-A- 0 063 821
FR-A- 2 392 937
GB-A- 2 056 962
GB-A- 2 072 650
US-A- 3 377 271

(56) References cited:
Leder,vol. 32, no. 5, 1981, E.Roether Verlag,
(Darmstadt, DE), G.Schmid et al.:
"Untersuchungen über den Einsatz eines
Schlaufenreaktors zur Beseitigung von
Schadstoffen aus Gerbereiabwässern",
pages 84-89, 101-105 see page85, paragraph
3: "Schema der Versuchsanlage"; page 85,
paragraph 5.4: "Untersuchungen zur pH-
Abhängigkeit der Sulfidoxidation"; page 89,
paragraph 5.8: "Eiweissausfällung"; page
103, paragraph 9: "Zusammenfassung",
points 1-4,7

(73) Proprietor: CONTE S.r.l.
Corso del Popolo 58
I-30172 Mestre (Venezia) (IT)

(72) Inventor: PEZZI, Alfredo
Via Ca' Rossa, 65
I-30173 Mestre (IT)

(74) Representative: Piovesana, Paolo
Corso del Popolo, 70
I-30172 Venezia-Mestre (IT)

EP 0 317 553 B1

EP 0 317 553 B1

## Description

This invention relates to a process for purifying pollutant alkaline effluent containing sulphides and proteic materials, and in particular the depilation effluent (liming effluent) and the effluent from the subsequent wash stages, in the tanning industry. The invention also relates to a plant for implementing the process.

The liming effluent from the "lime work" is formed from the first liming bath (solution of lime, sodium sulphide, caustic soda and wetting and surface-active additives in water), the components of the depilated hide epidermis, the water added to form the second liming bath, and further components dissolved from the treated hides. The wash liquor, deriving from at least two washes, contains the organic and inorganic residues of the previous processing steps, including the sodium chloride used for initially treating the hides.

Thus the processing effluent of the tanning industry, such as that described, represents a highly pollutant liquor, especially if the number of washes is small, and has a COD which, in relation to the number of washes, varies between about 30000 and 100000 mg $O_2/1$.

The purification of such liquors is a complicated problem, which up to the present time has been solved by various methods. In one of these methods, said liquor is diluted by adding sewage from the town sewer. This however has a series of serious drawbacks, in that:

– it does not solve the pollution problem unless successive active sludge purification treatment steps are applied, these being implementable only with large costly plan,

– it requires vast water quantities, which are available only in urban developments of adequate size.

Another known method comprises auto-purification of the liquor in oxidation pools or the disposal of sludge which has settled from the liquor in special dumps, together with mechanical filtration of the liquid part and active-sludge treatment of the filtrate. However, this method can also not be considered general in that it depends on particular territorial and regulatory situations, and often involves dispersion of substances having a high energy content which could find wide use in other sectors, such as the livestock or agricultural field.

In order to recover these substances it has also been proposed to treat tanning industry effluent with sodium metabisulphite, to oxidise the sulphides present in it, and then to convert these into sulphates, to be able to then extract the proteins.

However this method also has drawbacks, in that on the one hand it requires large quantities of sodium metabisulphite, ie a substance which is of high cost and also results in an undesirable increase in the salinity of the treated material, and on the other hand gives rise to the formation of colloidal sulphur, which alters the recoverable proteins and reduces their commercial value.

In the article Leder, E. Roether Verlag (Darmstadt, DE), G. Schmid et al: "Untersuchungen über den Einsatz eines Schlaufenreaktors zur Beseitigung von Schadstoffen aus Gerbereiabwässern" pages 84-89, Vol. 32, no. 5, 1981, a process is disclosed for treating alkaline pollutant effluents containing sulphides and proteic substances, comprising the following treatments in succession:

– a partial neutralisation of the free alkalinity of the pollutant effluent by using sulphuric acid to lower the pH to a value of about 10,

– an oxidation carried out by insufflating air finely spread to convert the sulphide present in the effluents to be purified into intermediate oxidation products,

– a separation of the coagulated proteic substances contained in the effluents which have been undergone to the previous oxidation, by using sulphuric acid to further lower the pH of these effluents to the proteins isoelectric point, and

– a separation of the coagulated proteins from the liquid fraction.

The process enables to separate proteins from the pollutant effluents containing them, but it requires the insufflation of air through ejectors which cause a scanty air-liquid contact, a high development of foams and therefore require a considerable use of catalyst which partly ends up in the proteins and partly pollutates the exhausted water.

The object of the invention is to obviate all these drawbacks by purifying the pollutant effluent in particular of the tanning industry by a process which:

– involves low plant costs,

– requires the use of low-cost reagents,

– involves short oxidation times and can be implemented in small, compact plants of limited size,

– does not use harmful substances, or give rise to the development of harmful substances,

– does not increase the salinity of the treated material, and in fact reduces it in the final product, and

– leads to a drastic lowering in COD.

This aim is achieved according to the invention by a process for treating alkaline pollutant effluent containing sulphides and proteic substances, particularly in the tanning industry, comprising the treatments of:

– partial neutralisation of the free alkalinity of the pollutant effluents, by using sulphuric acid to lower the

2

pH to a value of about 10,

– subsequent first oxidation carried out by insufflating air finely spread to convert the sulfide present in the effluents to be purified into intermediate oxidation products,

– coagulation and intermediate sedimentation of the proteic substances contained in the effluents which have been undergone to the previous first oxidation, by using sulphuric acid to further lower the pH of said effluents to the protein isoelectric point,

– separation of the coagulated proteins from the liquid fraction,

characterised in that it further comprises the treatments of:

– flocculation and subsequent sedimentation of the pollutant effluents before submitting them to neutralization,

– separation of the flocculated and sedimendated materials out from the liquid fraction before submitting it to the neutralisation,

– second oxidation of said liquid fraction to convert the oxidation intermediate products into sulphates,

– neutralisation of the turbid liquid, obtained from the second oxidation treatment, by calcium hydroxide until a pH value suitable for discharge is obtained, and

– final sedimentation.

Advantageously the second oxidation can be conducted in the presence of a ferric salt functioning as a further oxidising and flocculating agent.

The plant for implementing the method comprises:

– a first reactor in which the material suspended in the effluent to be treated is flocculated,

– a first setting tank in which a first separation of the flocculated materials from the liquid phase takes place,

– a second reactor in which the free alkalinity of hte supernatant from said first setting tank is partly neutralised,

– a first oxidation tank,

– a third reactor in which coagulation of the proteic sustances contained in the oxidised liquor takes place,

– a separator for separating the coagulated proteins from the liquid phase,

– a second oxidation tank,

– a fourth reactor in which the turbid liquid from the second oxidation tank is completely neutralised,

– a second settling tank in which sedimentation of salts and hydroxides takes place.

A preferred embodiment of the present invention is described in detail hereinafter with reference to the accompanying drawings, in which:

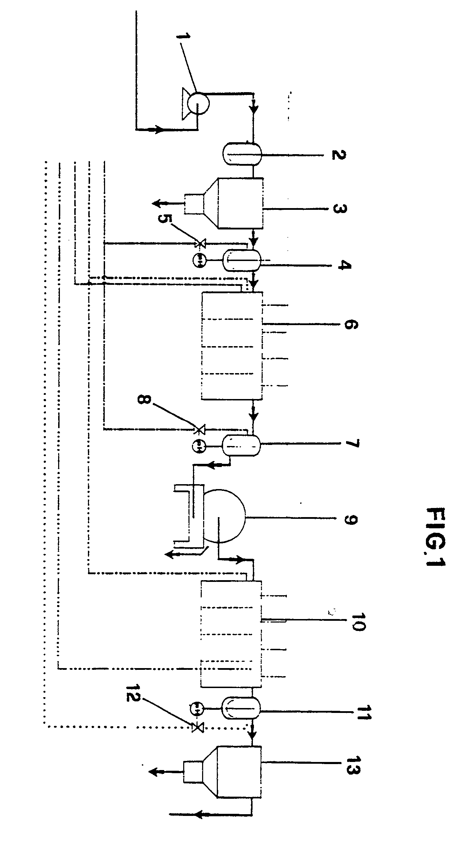

Figure 1 is a schematic block diagram of the process according to the invention; and

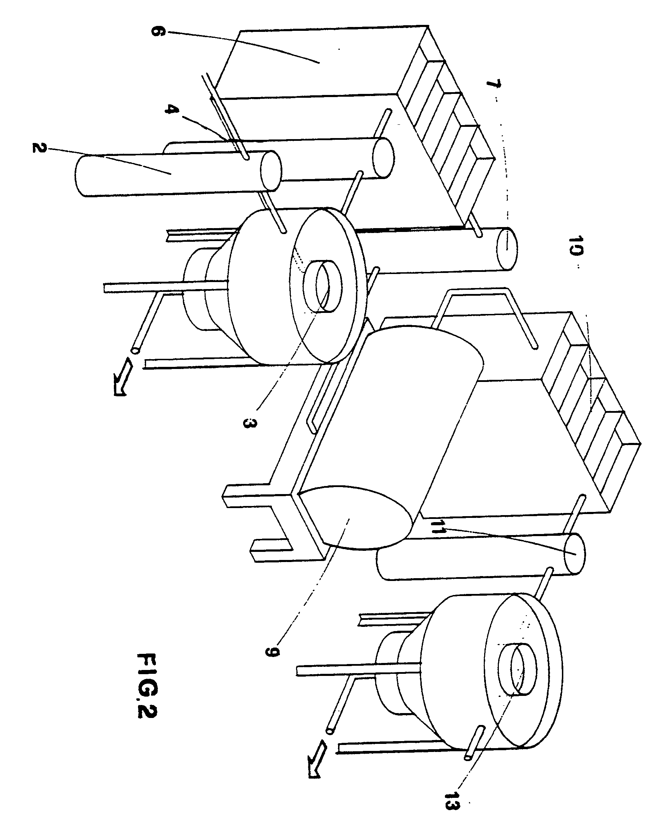

Figure 2 is a schematic isometric view of a plant for implementing the process according to the invention.

As can be seen from the figures, the process according to the invention is implemented with a plant comprising a reactor 2 to which the effluent to be treated is fed after being previously collected in conventional equalisation tands provided with air bubblers, not shown on the drawings for simplicity. The effluent to be treated is fed from the equalisation tanks to the reactor 2 by a centrifugal pump 1.

A magnesium sulphate feed pipe is also connected to the reactor 2.

The outlet of the reactor 2 is connected to a settling tank 3, which is itself connected to a further reactor 4 provided with an energetic mechanical stirrer and fitted with a gas offtake pipe. A sulphuric acid feed pipe is also connected to this reactor and is fitted with a valve 5 for controlling the pH in the reactor 4. The outlet of the reactor 4 is connected to an oxidation tank 6 comprising several compartments in series, to the first of which there are connected an antifoaming agent feed pipe and a manganese sulphate feed pipe. All the compartments of the oxidation tank 6 are also connected to a pipe for feeding an air stream which, as will be apparent hereinafter, oxidises the sulphides present in the effluent to be treated.

Within each compartment, the air feed pipe is configured as a porous ceramic or porous plastic aerator tube able to feed into the water in which it is immersed a stream of air in the form of very minute bubbles in a sufficient quantity to effect total sulphide oxidation during the oxidation treatment time.

The outlet of the oxidation tank 6 is connected to a further reactor 7 provided with an energetic mechanical stirrer and fitted with a gas offtake pipe. A sulphuric acid feed pipe is also connected to the reactor 7, and is provided with a valve 8 for controlling the pH in the reactor 7.

The outlet of the reactor 7 is connected to an apparatus for collecting the products which have coagulated in this reactor, the apparatus in the described example consisting of a rotary vacuum filter 9. This is connected to a second oxidation tank 10, of analogous type to the preceding oxidation tank 6, ie consisting of several compartments connected in series, into which aerator tubes open. A pipe for feeding an antifoaming agent, to be used only if necessary, is connected to the first compartment, and a pipe for feeding a solution of ferric and ammonium polysulphates is connected to the last compartment. The outlet of the oxidation tank 10 is connected to a further reactor 11 provided with a mechanical stirrer. A lime feed pipe is connected to this reactor, and is provided with a valve 12 for controlling the pH in the reactor.

The outlet of the reactor 11 is connected to a static settling tank 13.

The process according to the invention, which uses the plant heretofore described, is as follows:

the effluent to be treated (liquor), originating from the equalisation tanks and having for example a pH of about 13-13.5, is fed by the pump 1 to the reactor 2, into which magnesium sulphate is added until the material suspended in the liquor has flocculated.

The liquor treated in this manner is then fed into the settling tank 3, in which initial separation of the flocculated materials from the liquid phase takes place, this separation having the effect of limiting subsequent use of sulphuric acid, favouring sulphide oxidation and improving the characteristics of the filtrate which separates in the rotary filter 9.

The supernatant from the settling tank 3 is fed to the reactor 4, where sulphuric acid is added until the pH reaches a value of about 9,7-10. On reaching the correct pH value, the valve 5 interrupts the sulphuric acid flow.

After a predetermined residence tipe in the reactor 4 under energetic stirring, the product under treatment is transferred into the oxidation tank 6. A salt of a transition element (Fe, Co, Ni, Mn) is fed into the first compartment of the tank 6 to catalyse the oxidation of the sodium sulphide present in the treated effluent. Manganese sulphate is preferably used.

The sodium sulphide is oxidised in the compartments of the tank 6 under the action of the oxygen contained in the air fed through the aerator tubes, and is converted into intermediate products such as sodium sulphites, sulphates and thiosulphates.

The oxidised liquor from the tank 6 is fed into the reactor 7, into which sulphuric acid is also fed until the protein isoelectric point (pH= 5-5,5) is reached. Here the mechanical stirring of the liquor mixed with sulphuric acid causes their sufficient homogenisation with simultaneous protein coagulation. The entire contents then pass to the rotary filter 9 where the coagulated proteins are separated from a clear liquid, which is fed to the tank 10 in which the intermediate products (sulphites, sulphates and thiosulphates) deriving from the sodium sulphide are oxidised.

A ferric salt (such as ferric sulphate) is fed into the last compartment of the oxidation tank 10 to act as an oxidising and flocculating agent, possibly in conjunction with an aluminium salt (such as aluminium sulphate) for flocculation purposes. A solution of iron and aluminium polysulphates (2% $Fe_2O_3$ and 3% $Al_2O_3$) is preferably used.

The turbid liquid formed mainly of inorganic material (aqueous sodium chloride and sulphate solution in which partly precipitated calcium, iron and aluminium sulphate are suspended) leaves the tank 10 and is fed into the reactor 11 where it is mixed under mechanical stirring with lime ($Ca(OH)_2$) for its complete neutralisation. In the reactor 11 the metric pH probe regulates the lime quantity so as to allow complete precipitation of the iron and aluminium hydroxides and to adjust the pH to a value suitable for discharge (pH= 7-7.5).

The product leaving the reactor 11 is conveyed into the static settling tank 13, where sedimentation takes place of the salts except for the sodium chloride and sulphate, and of the hydroxides ($CaSO_4$ + $Fe(OH)_2$ + $Fe(OH)_3$ + $Al(OH)_3$).

The supernatant, which is perfectly clear, odourless and colourless, can be dispersed into suitable sewerage or can be fed to biological treatment for complete elimination of the residual organic load and conversion of the proteic and ammoniacal nitrogen into nitric nitrogen.

The salt load of the final product leaving the static settling tank 13, which derives from sodium chloride and sulphate and remains unchanged even following the biological treatment, is in all cases considerably less than the salt load of the initial liquor.

The process according to the invention is considerably more advantageous than conventional processes in that:

- it results in low plant costs,
- it requires the use of low-cost reagents,
- it involves short air-oxidation times and can be implemented with small, compact plants of limited size,
- it does not use harmful products, or give rise to the development of harmful substances,
- it results in a considerable lowering of the COD of the treated effluent and reduces its salinity.

The following example, conducted with an experimental plant on an effluent sample from a tanning works, will further clarify the invention.

The treated effluent, having an original COD of 66.000 mg $O_2/1$, was fed into the reactor 2, in which it received about 500 p.p.m. of $Mg(SO)_4$ in a 25% solution. After about 10 minutes of residence in the reactor 2, in which complete flocculation of the suspended material took place, the treated effluent was fed into the settling tank 3 where, over a period of about 1 hour, magnesium hydroxide, calcium sulphate and animal tissue particles of mucillaginous consistency sedimented in a quantity of 7.2 kg/$m^3$ of effluent, and had the following composition:

| | |
|---|---|
| moisture | 50 % |
| ash | 33 % |
| proteic nitrogen | 3,9% |

The supernatant from the settling tank 3 was fed into the reactor 4 and $H_2SO_4$ was added under energetic stirring for 5 minutes, until the pH had reached 9,8.

The product was then transferred into the oxidation tank 6, into which $Mn(SO)_4$ in a 15% aqueous solution was also fed to the extent of 20 mg of salt per litre of product to be treated. After a residence time of about 2 hours, sufficient to oxidise the sulphides, the oxidised liquor was transferred into the reactor, 7, into which sulphuric acid was also fed in such a quantity as to reduce the pH to 5 and thus cause protein coagulation. After a residence time of about 10 minutes under continuous stirring, the coagulated proteic material was in abundant quantity and had a caseous appearance. Its sedimentation would have required 8-10 hours, and because of this it was preferred to use more rapid separation by means of the rotary filter 9 using kieselguhr, which enabled about 25 kg of an easily agglomerable light-coloured paste to be extracted per cubic metre of liquor, and which separated very easily from the kieselguhr support for subsequent drying.

Its composition in a sample dried under vacuum at a temperature of 60°C was as follows:

| | |
|---|---|
| moisture | 8,5% |
| ash | 21 % |
| proteic nitrogen | 61 % |

The contained proteins were absorbable to the extent of 51% and represented an excellent byproduct for livestock use, in contrast to the byproduct obtained after the first sedimentation, the low protein content of which made it however suitable for spraying over agricultural ground.

The liquor separated by the rotary filter 9 was fed to the oxidation tank 10, into the last compartment of which iron was fed to the extent of 200 p.p.m. in the form of an iron and aluminium polysulphate (2% $Fe_2O_3$ and 3% $Al_2O_3$). After about 2 hours of treatment in this tank, the turbid liquid was fed into the reactor 11 together with lime, and subjected to continuous mechanical stirring until complete neutralisation had taken place (pH = 7-7,5) with complete precipitation of the iron and aluminium hydroxides.

After remaining for about 2 hours in the static settling tank, during which sedimentation of the iron and aluminium salts and hydroxides occured, the supernatant, which was clear, colourless and odourless, had the following composition:

| | |
|---|---|
| chlorides ($Cl^-$) | 12 g/l |
| sulphates ($SO_4^{--}$) | 6,2 g/l |
| proteic nitrogen | 1,3 g/l |
| ammoniacal nitrogen | 0,08 g/l |
| calcium ($Ca^{++}$) | 1,2 g/l |
| sodium ($Na^+$) | 8,75 g/l |

and the following characteristics:

COD   3900 mg $O_2$/l

$BOD_5$   800 mg $O_2$/l

The overall salinity derived mainly from sodium chloride, which was already present in the original liquor, and from sodium sulphate, resulting from oxidation of the sodium sulphide. These two salts were present in the following quantities:

$Na_2SO_4$   7,1 g/l

NaCl   16,1 g/l

The residual liquor was subjected to further biological tratment to completely eliminate the residual organic load and convert the protein and ammoniacal nitrogen into nitric nitrogen. In this manner, a liquid was obtained having the following characteristics:

| | | |
|---|---|---|
| COD | < | 180 mg $O_2$/l |
| $BOD_5$ | < | 30 mg $O_2$/l |

EP 0 317 553 B1

## Claims

1. A process for treating alkaline pollutant effluents containing sulphides and proteic substances, particularly in the tanning industry, comprising the treatments of:
   - partial neutralisation of the free alkalinity of the pollutant effluents, by using sulphuric acid to lower the pH to a value of about 10,
   - subsequent first oxidation carried out by insufflating air finely spread to convert the sulfide present in the effluents to be purified into intermediate oxidation products,
   - coagulation and intermediate sedimentation of the proteic substances contained in the effluents which have been undergone to the previous first oxidation, by using sulphuric acid to further lower the pH of said effluents to the protein isoelectric point,
   - separation of the coagulated proteins from the liquid fraction,
   characterised in that it further comprises the treatments of:
   - flocculation and subsequent sedimentation of the pollutant effluents before submitting them to neutralization,
   - separation of the flocculated and sedimendated materials out from the liquid fraction before submitting it to neutralisation
   - second oxidation of said liquid fraction to convert the oxidation intermediate products into sulphates,
   - neutralisation of the turbid liquid, obtained from the second oxidation treatment, by calcium hydroxide until a pH value suitable for discharge is obtained, and
   - final sedimentation.

2. A process as claimed in claim 1 characterised in that the separation of coagulated proteins out from the liquid fraction is carried out by sedimentation.

3. A process as claimed in claim 1 characterised in that the separation of coagulated proteins out from the liquid fraction is carried out by filtration.

4. A process as claimed in claim 1, characterised in that the material suspended in the liquor is flocculated by feeding magnesium sulphate into a reactor (2) containing said liquor.

5. A process as claimed in claim 1, characterised by adding a quantity of sulphuric acid to the supernatant from the preceding first sedimentation treatment sufficient to adjust its pH to 9,8.

6. A process as claimed in claim 1, characterised in that the first oxidation is conducted in the presence of a catalyst consisting of a salt of a transition element.

7. A process as claimed in claim 6, characterised in that the first oxidation is carried out in the presence of manganese sulphate in an amount of 20 mg/l.

8. A process as claimed in claim 1, characterised in that the first and/or second oxidation is conducted with air.

9. A process as claimed in claim 1, characterised in that the second oxidation is conducted in the presence of a ferric salt functioning as a further oxidising and flocculating agent.

10. A process as claimed in claim 9, characterised in that the second oxidation is conducted in the presence of ferric sulphate.

11. A process as claimed in claim 9, characterised in that the second oxidation is conducted in the presence of an aluminium salt functioning as a flocculating agent.

12. A process as claimed in claim 11, characterised in that the second oxidation is conducted in the presence of aluminium sulphate.

13. A process as claimed in claim 9, characterised in that the second oxidation is conducted in the presence of a solution of iron and aluminium polysulphates.

14. A process as claimed in claim 13, characterised in that the second oxidation is conducted in the presence of a solution of iron and aluminium polysulphates containing 2% $Fe_2O_3$ and 3% $Al_2O_3$.

15. A plant for implementing the process claimed in one or more of claims 1 to 14, characterised by comprising:
    - a first reactor (2) in which the material suspended in the effluent to be treated is flocculated,
    - a first settling tank (3) in which a first separation of the flocculated materials from the liquid phase takes place,
    - a second reactor (4) in which the free alkalinity of the supernatant from said first settling tank (3) is partly neutralised,
    - a first oxidation tank (6),
    - a third reactor (7) in which coagulation of the proteic sustances contained in the oxidised liquor takes place,
    - a separator (9) for separating the coagulated proteins from the liquid phase,

6

– a second oxidation tank (10),

– a fourth reactor (11) in which the turbid liquid from the second oxidation tank (10) is completely neutralised,

– a second settling tank (13) in which sedimentation of salts and hydroxides takes place.

16. A plant as claimed in claim 16, characterised in that the first and second oxidation tanks (6,10) comprise compartments in series.

17. A plant as claimed in claim 15, characterised in that the reactors (4,7 and 11) are provided with a metric pH probe which controls the valves (5,8 and 12) for feeding the sulphuric acid and lime into the corresponding reactor respectively.

18. A plant as claimed in claim 14, characterised in that the separator (9) for separating the coagulated proteins from the liquid phase consists of a rotary vacuum filter.

19. A plant as claimed in claim 15, characterised in that an air feed pipe is disposed within each compartment of the tanks (6,10).

20. A plant as claimed in claim 19, characterised in that a bank of aerator tubes of porous material is connected to each air feed pipe.

## Patentansprüche

1. Verfahren zur Behandlung alkalischer, verunreinigender, Sulfide und Proteinsubstanzen enthaltender Abwässer, insbesondere aus der Gerberei, welches Verfahren folgende Schritte enthält:

– partielle Neutralisation der freien Alkalinität der verunreinigenden Abwässer durch Zuzatz von Schwefelsäure zur Herabsetzung des pH-Werts auf etwa 10.

– anschließende erste Oxidation durch Einblasen feinverteilter Luft zur Umwandlung des in den zu reinigende Abwässern enthaltenen Sulfids in Oxidationswischenprodukte,

– koagulierung und zwischenzeitlich erfolgende Sedimentation der Proteinsubstanzen, die in den der vorhergehenden ersten Oxidation unterworfenen Abwässern enthalten sind, durch Zusatz von Schwefelsäure zur weiteren Herabsetzung des pH-Werts dieser Abwässer auf den isoelektrischen Punkt der Proteine,

– Abtrennung der koagulierten Proteine aus der flüssigen Fraktion,

dadurch gekennzeichnet, daß es zuzätzlich folgende Verfahrensschritte enthält:

– Ausflockung und anschließende Sedimentation der verunreinigenden Abwässer, bevor sie neutralisiert werden,

– Abtrennung der ausgeflockten und abgesetzten Stoffe aus der flüssigen Fraktion, bevor diese neutralisiert wird,

– zweite Oxidation der flüssigen Fraktion zur Umwandlung der Oxidationszwischenprodukte in Sulfate,

– Neutralisation der aus der zweiten Oxidationsbehandlung stammenden trüben Flüssigkeit mit Calciumhydroxyd, bis ein zur Ableitung geeigneter erhalten wird, und

– abschließende Sedimentation.

2. Verfahren nach Anspruch 1, dadurch gekennzeichnet, daß die Abtrennung der koagulierten Proteine aus der flüssigen Fraktion durch Sedimentation erfolgt.

3. Verfahren nach Anspruch 1, dadurch gekennzeichnet, daß die Abtrennung der koagulierten Proteine aus der flüsssigen Fraktion durch Filtration erfolgt.

4. Verfahren nach Anspruch 1, dadurch gekennzeichnet, daß das in der Flüssigkeit suspendierte Material durch Zuführung von Magnesiumsulfat in einen diese Flüssigkeit enthaltenden Reaktor (2) erfolgt.

5. Verfahren nach Anspruch 1, dadurch gekennzeichnet, daß zu dem überstand aus der vorhergehenden ersten Sedimentationsbehandlung eine zur Einstellung eines pH-Werts auf 9,8 ausreichende Menge Schwefelsäure zugesetz wird.

6. Verfahren nach Anspruch 1, dadurch gekennzeichnet, daß die erste Oxidation in Gegenwart eines Katalysators durchgeführt wird, der aus einem Salz eines übergangselements besteht.

7. Verfahren nach Anspruch 6, dadurch gekennzeichnet, daß die erst Oxidation in Gegenwart von Mangansulfat in einer Menge von 20 mg/l durchgeführt wird.

8. Verfahren nach Anspruch 1, dadurch gekennzeichnet, daß die erste und/oder zweite Oxidation mit Luft durchgeführt wird.

9. Verfahren nach Anspruch 1, dadurch gekennzeichnet, daß die zweite Oxidation in Gegenwart eines Eisen(III)salzes durchgeführt wird, das als weiteres Oxidations- und Flockungsmittel wirkt.

10. Verfahren nach Anspruch 9, dadurch gekennzeichnet, daß die zweite Oxidation in Gegenwart von Eisen(III)sulfat durchgeführt wird.

11. Verfahren nach Anspruch 9, dadurch gekennzeichnet, daß die zweite Oxidation in Gegenwart eines Aluminiumsalzes als Flockungsmittel durchgeführt wird.

12. Verfahren nach Anspruch 11, dadurch gekennzeichnet, daß die zweite Oxidation in Gegenwart von Aluminiumsulfat durchgeführt wird.

13. Verfahren nach Anspruch 9, dadurch gekennzeichnet, daß die zweite Oxidation in Gegenwart einer Lösung von Eisen- und Aluminiumpolysulfaten durchgeführt wird.

14. Verfahren nach Anspruch 13, dadurch gekennzeichnet, daß die zweite Oxidation in Gegenwart einer Lösung von Eisen- und Aluminiumpolysulfaten durchgeführt wird, die 2% $Fe_2O_3$ und 3% $Al_2O_3$ enthält.

15. Anlage zur Durchführung des in einem order mehreren der Ansprüche 1 bis 14 beanspruchten Verfahrens, dadurch gekennzeichnet, daß sie umfaßt:
– einen ersten Reaktor (2), in welchem das in dem zu behandelnden Abwasser suspendierte Material ausgeflockt wird,
– einen ersten Absetztank (3), in welchem eine erste Trennung des ausgeflockten Materials von der flüssigen Phase stattfindet,
– einen zweiten Reaktor (4), in welchem die freie Alkalinität des überstands aus der ersten Absetztank (3) teilweise neutralisiert wird,
– einen ersten Oxidationstank (6),
– einen dritten Reaktor (7), in welchem die Koagulation der in der oxidierten Flüssigkeit enthaltenen Proteinsubstanzen stattfindet,
– einen Separator (9) zur Abtrennung der koagulierten Proteine aus der flüssigen Phase,
– einen zweiten Oxidationstank (10),
– einen vierten Reaktor (11), in welchem die aus dem zweiten Oxidationstank (10) stammende trübe Flüssigkeit vollständig neutralisiert wird,
– einen zweiten Absetztank (13), in welchem die Sedimentation von Salzen und Hydroxiden stattfindet.

16. Anlage nach Anspruch 15, dadurch gekennzeichnet, daß der erste und der zweite Oxidationstank (6,10) in Serie angeordnete Abteile aufweisen.

17. Anlage nach Anspruch 15, dadurch gekennzeichnet, daß die Reaktoren (4,7 und 11) mit einer metrischen pH-Sonde ausgerüstet sind, die die Ventile (5,8 und 12) zur Zuführung von Schwefelsäure und Kalk in den jeweiligen Reaktor steuern.

18. Anlage nach Anspruch 14, dadurch gekennzeichnet, daß der Separator (9) zur Abtrennung der koagulierten Proteine aus der flüssigen Phase aus einem Rotationsvakuumfilter besteht.

19. Anlage nach Anspruch 16, dadurch gekennzeichnet, daß innerhalb jedes Abteils der Tanks (6,10) eine Luftzuführungsleitung vorgesehen ist.

20. Anlage nach Anspruch 19, dadurch gekennzeichnet, daß eine Reihe von Belüftungsrohren aus porösem Material mit jeder Luftzuführungsleitung verbunden ist.

## Revendications

1. Un procédé pour traiter des effluants polluants alcalins contenant des sulfures et des substances protéiques, particulièrement dans l'industrie du tannage, comprenant les traitements de:
– neutralisation partielle de l'alcalinité libre des effluants polluants, en utilisant de l'acide sulphurique pour réduire le pH à une valeur de 10 environ,
– subséquente première oxidation réalisée en insufflant de l'air finement pulvérisé pour transformer le sulfure présent dans les effluants à purifier en produits d'oxydation intermédiaires,
– coagulation et sédimentation des substances protéiques contenues dans les effluants qui ont été soumis à la première oxidation précédente, en utilisant de l'acide sulphurique pour réduire encore le pH desdits effluants jusqu'au point isoélectriques de la protéine,
– séparation des protéines coagulées de la fraction liquide,
caractérisé en ce qu'il comprend en outre des traitements de:
– floculation et subséquente sédimentation des effluants polluants avant de les soumettre à neutralisation,
– séparation des matériaux déposés par floculation et par sédimentation de la fraction liquide avant de la soumettre à neutralisation,
– deuxième oxidation de ladite fraction liquide pour transformer les produits intermédiaires d'oxydation en sulfates,
– neutralisation du liquide trouble, obtenu du deuxième traitement d'oxydation, par de l'hydroxyde de calcium jusqu'à obtenir un pH convenant à l'évacuation, et
– sédimentation finale.

2. Un procédé comme revendiqué dans la revendication 1, caractérisé en ce que la séparation des protéines coagulées de la fraction liquide est réalisée par sédimentation.

3. Un procédé comme revendiqué dans la revendication 1, caractérisé en ce que la séparation des protéines coagulées de la fraction liquide est réalisée par filtration.

4. Un procédé comme revendiqué dans la revendication 1, caractérisé en ce que le matériau en suspension dans le liquide est floculé en introduisant du sulphate de magnésium dans un réacteur (2) contenant ledit liquide.

5. Un procédé comme revendiqué dans la revendication 1, caractérisé par l'addition d'une quantité d'acide sulphurique au surnageant de la subséquente première sédimentation suffisante pour porter son pH à 9,8.

6. Un procédé comme revendiqué dans la revendication 1, caractérisé en ce que la première oxydation est réalisée en présence d'un catalyseur consistant en un sel d'un élément de transition.

7. Un procédé comme revendiqué dans la revendication 6, caractérisé en ce que la première oxydation est réalisée en présence de sulphate de magnésium dans une concentration de 20 mg/1.

8. Un procédé comme revendiqué dans la revendication 1, caractérisé en ce que la première et/ou deuxième oxydation est réalisée avec de l'air.

9. Un procédé comme revendiqué dans la revendication 1, caractérisé en ce que la deuxième oxydation est réalisée en présence d'un sel ferrique agissant comme un agent oxydant et floculant supplémentaire.

10. Un procédé comme revendiqué dans la revendication 9, caractérisé en ce que la deuxième oxydation est réalisée en présence de sulfate ferrique.

11. Un procédé comme revendiqué dans la revendication 9, caractérisé en ce que la deuxième oxydation est réalisée en présence d'un sel d'aluminium agissant comme un agent floculant.

12. Un procédé comme revendiqué dans la revendication 11, caractérisé en ce que la deuxième oxydation est réalisée en présence de sulfate d'aluminium.

13. Un procédé comme revendiqué dans la revendication 9, caractérisé en ce que la deuxième oxydation est réalisée en présence d'une solution de polysulfates de fer et d'aluminium.

14. Un procédé comme revendiqué dans la revendication 13, caractérisé en ce que la deuxième oxydation est réalisée en présence d'une solution de polysulfates de fer et d'aluminium contenant 2% de $Fe_2O_3$ et 3% de $Al_2O_3$.

15. Une installation pour mettre en oeuvre le procédé revendiqué dans l'une ou plusieurs des revendications 1 à 14, carcatérisée en ce qu'elle comprend:
- un premier réacteur (2) dans lequel le matériau en suspension dans l'effluant à traiter est floculé,
- un premier bac de décantation (3) dans lequel s'effectue la première séparation des matériaux floculés de la phase liquide,
- un deuxième réacteur (4) dans lequel l'alcalinité libre du liquide surnatant provenant dudit premier bac de décantation (3) est partiellement neutralisée,
- une première cuve d'oxydation (6),
- un troisième réacteur (7) dans lequel s'effectue la coagulation des substances protéiques contenues dans le liquide oxyde,
- un séparateur (9) pour séparer les protéines coagulées de la phase liquide,
- un deuxième bac d'oxydation (10),
- un quatrième réacteur (1) dans lequel le liquide trouble provenant du deuxième bac d'oxydation (10) est complètement neutralisé,
- un deuxième bac de décantation (13) dans lequel s'effectue la sédimentation des sels et des hyroxydes.

16. Une installation comme revendiqué dans la revendication 15, caractérisée en ce que le premier et le deuxième bacs d'oxydation (6,10) comprenant des compartiments en série.

17. Une installation comme revendiqué dans la revendication 15, caractérisée en ce que les réacteurs (4,7 et 11) sont équipés d'un pH-mètre métrique qui commande les valves (5, 8 et 12) pour introduire respectivement l'acide sulphurique et de la chaux dans le réacteur correspondant.

18. Une installation comme revendiqué dans la revendication 14, caractérisée en ce que le séparateur (9) pour séparer les protéines coagulées de la phase liquide consiste en un filtre rotatif à vide.

19. Une installation comme revendiqué dans la revendication 16, caractérisée en ce qu'un tuyau d'alimentation d'air est disposé à l'intérieur de chaque compartiment des bacs (6,10).

20. Une installation comme revendiqué dans la revendication 19, caractérisée en ce qu'une rangée de tubes d'aérateur en matériau poreux est reliée à chaque tuyau d'alimentation d'air.

FIG.1

FIG.2